**Europäisches Patentamt**

**European Patent Office**

**Office européen des brevets**

(19)

(11) Publication number: **0 121 372**
A2

(12) # EUROPEAN PATENT APPLICATION

(21) Application number: **84301837.5**

(22) Date of filing: **19.03.84**

(51) Int. Cl.³: **G 11 C 9/06**

(30) Priority: **05.04.83 US 482238**

(43) Date of publication of application:
**10.10.84 Bulletin 84/41**

(84) Designated Contracting States:
**BE DE FR GB IT NL SE**

(71) Applicant: **BURROUGHS CORPORATION**
**Burroughs Place**
**Detroit, Michigan 48232(US)**

(72) Inventor: **Steckler, Thomas Michael**
**P.O. Box 17 R.D. No. 1**
**Christiana PA 17509(US)**

(74) Representative: **Kirby, Harold Douglas Benson et al,**
**G.F. Redfern & Company Marlborough Lodge 14**
**Farncombe Road**
**Worthing West Sussex BN11 2BT(GB)**

(54) Hierarchy of control stores for overlapped data transmission.

(57) A controller for communication between the auxiliary processor and a cache mechanism in the system interface which communication is to be carried on independently of main memory accesses required to update the cache mechanism in an overlapped manner.

_Fig.4_

EP 0 121 372 A2

-1-

## HIERARCHY OF CONTROL STORES FOR OVERLAPPED
## DATA TRANSMISSION

### RELATED U. S. PATENT APPLICATIONS

U. S. patent applications directly or indirectly related to the subject application are the following:

Serial No. 482,237 ,filed April 5, 1983 by Thomas M. Steckler and entitled Multilevel Controller for a Cache Memory Interface in a Multiprocessor System.

### BACKGROUND OF THE INVENTION

### Field of the Invention

This invention relates to a multilevel controller and more particularly for such controller for a cache memory interface between a data processor and another processing system each of which have different operating speeds as well as memory addressing requirements.

### Description of the Prior Art

In the interfacing of two different data processing systems, particularly of different performance rates, a number of incompatabilities
are encountered. Such incompatabilities
include differences in memory access times, the
different clock frequencies at which the respective
processors are operated, different command structures
and memory addressing capabilities of the respective
processors.

The present invention is directed toward
interfacing one or more commercially available
entry level data processors such as Burroughs B5900
with a large multiprocessing system, which entry level
data processors serve as auxiliary processors for
the purposes of handling off-loaded chores and also
maintenance routines where required. The performance
and throughput of the system is thus greatly enhanced by
relieving the main data processing units of such tasks.
Incompatabilities must be resolved due to the fact
that the large multiprocesing system clock rate can be
different than that of the entry level data processor,
and the main memory system is 128 times the capacity of the
entry level system. This in turn, requires memory control
words which contain more bits than does the entry level
system. Further, because the main memory system
is a hundred twenty-eight times that for which the
entry level data processor was designed, its access
time is larger than that of the entry level processor.

The system interface of the present
invention resolves these incompatabilities in a
number of ways. The system interface resolves the
difference in memory access capabilities by
providing a cache mechanism for storing a number of
data and code words at a time, which words are fetched from the main memory system while the auxiliary processor
is working with the data and code words currently
in the cache mechanism. The use of such a cache
mechanism as a buffer between a large but relatively
slow memory system and a data processor and the
provision for accessing a large back-up memory should
a requested data element not be present in the cache mechanism
is disclosed in the Barton U.S. Patents No. 3,292,152
and No. 3,292,153. Such techniques are employed in many
commercially available data processing systems such as
the IBM System 360/370 series.

In addition, the system interface anticipates
and prefetches from the main memory system those
segments or "pages" of code which would normally
be next required by the auxiliary processor.
The system interface is also adapted to convert the
auxiliary processor's commands into memory control
words as well to synchronize the clocks of the main
memory system and the auxiliary processor respectively.

It will be appreciated from the above, that
the system interface must control a number of
different actions occurring between the auxiliary
processor and the main memory system, which actions
are requested and occur independently of one another,
and since the auxiliary processor and the main memory
system with which it communicates have independent
controls, the system interface requires a multilevel
control unit to control the various independent
operations without denying access to portions of cache
memory currently being used by the auxiliary processor.

It is then, an object of the present
invention to provide an improved system interface

-4-

between an auxiliary processor and a large multiprocessing system having different data rates, memory capacity and control word format.

It is another feature of the present invention to provide such a system interface with a multilevel control unit to control independently initiated actions across the interface.

It is still another object of the present invention to provide such a multilevel control unit which nevertheless synchronizes independently requested actions across the interface.

## SUMMARY OF THE INVENTION

In order to accomplish the above-identified objects, the system interface of the present invention resides between an auxiliary processor and a main memory system of a multiprocessing system. The interface is divided into two portions or modules: a cache mechanism module and a main memory interface module. The cache mechanism module performs normal cache functions of receiving data and code words from main memory at a slower frequency but higher clock rate and supplies those words to the auxiliary processor at a faster frequency but slower clock rate. The memory interface module initiates requests for main memory accesses in response to requests from the auxiliary processor. Both modules are under the control of the microprogram controller; however, since the functions of both modules overlap, the controller is formed of two control stores for the cache mechanism module and the main memory interface module, respectively. The cache mechanism control store receives code information from the auxiliary processor as well as
condition signals and supplies commands to that
mechanism and also addresses to the main memory interface
control store, that in turn, supplies commands to the
main memory interface module as well as notifying the
cache mechanism control store of its current state
for the purposes of synchronization.

A feature then, of the present invention
resides in a microprogram controller for a system
interface between an auxiliary processor and a main
memory system which controller includes two control
stores, one to control the functions of a cache
mechanism and the other to control the functions of
main memory accessing where the first control store
provides addresses or commands to the second control
store that in turn notifies the first control store
of its current state.

BRIEF DESCRIPTION OF THE DRAWINGS

The above and other advantages and features
of the present invention will become more readily
apparent from a review of the following specification
when taken in conjunction with the drawings wherein:

Figure 1 is a schematic diagram of a
multiprocessing system employing the present invention;

Figure 2 is a schematic diagram of an
auxiliary processor and its connection to a system
interface of the present invention;

Figures 3A and B are a schematic diagram of the
system interface employed with the present invention; and

Figure 4 is a schematic diagram of the
two-level microprogram controller of the present
invention.

GENERAL DESCRIPTION OF THE INVENTION

As was indicated above, the present invention
is directed toward the interfacing of an entry level
data processor into a large multiprocessing system
which entry level processor serves as an auxiliary
processor to handle off-loaded chores to enhance the
performance and throughput of the system as a whole.
The present invention is embodied in a system
interface which resolves differences in memory access
capabilitites, data rates and clock frequencies by
providing a cache memory mechanism and a main memory
interface mechanism which operate in overlap fashion
under control of a two-level microcontroller.

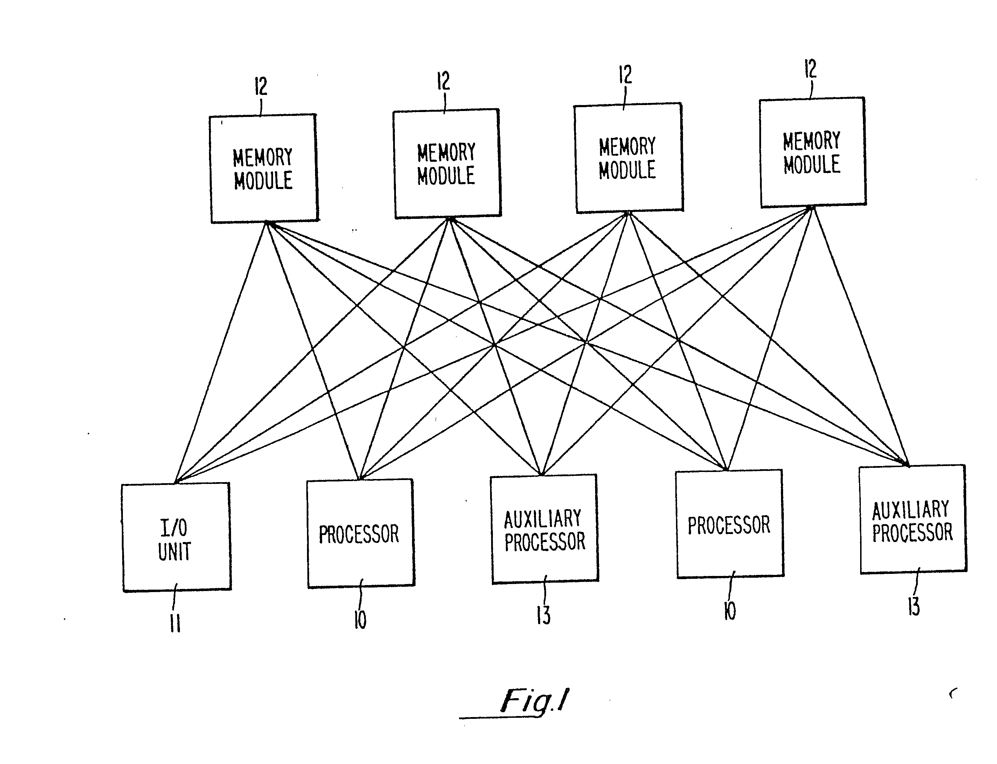

Such multiprocessing system is illustrated
in Figure 1 and may be of the type described in the
Mott et al U.S. Patent No. 3,319,226. The system
includes a plurality of main processing units 10 and
one or more I/O processors 11 each of which can
communicate with any one of a plurality of memory
modules 12. In addition, the system includes a
plurality of auxiliary processors 13, which may be
just a commercially available entry level processor
which nevertheless has a slower clock frequency and
less memory addressing capabilities. For example, in
the embodiment of the present invention, the entry level
or auxiliary level processor has a clock rate of 4 MEGHZ
while the rest of the system has a clock rate of 8 MEGHZ.
Furthermore, an auxiliary processor is capable of
address ing only a million words of memory while,
in the present invention, four main memory modules 12 are capable of storing 128 million words of data and code. However, because of the size of the main memory system in Figure 1, the memory access time is typically 1600 nanoseconds while the auxiliary processors 13 are designed for memory access time of only 600 nanoseconds.

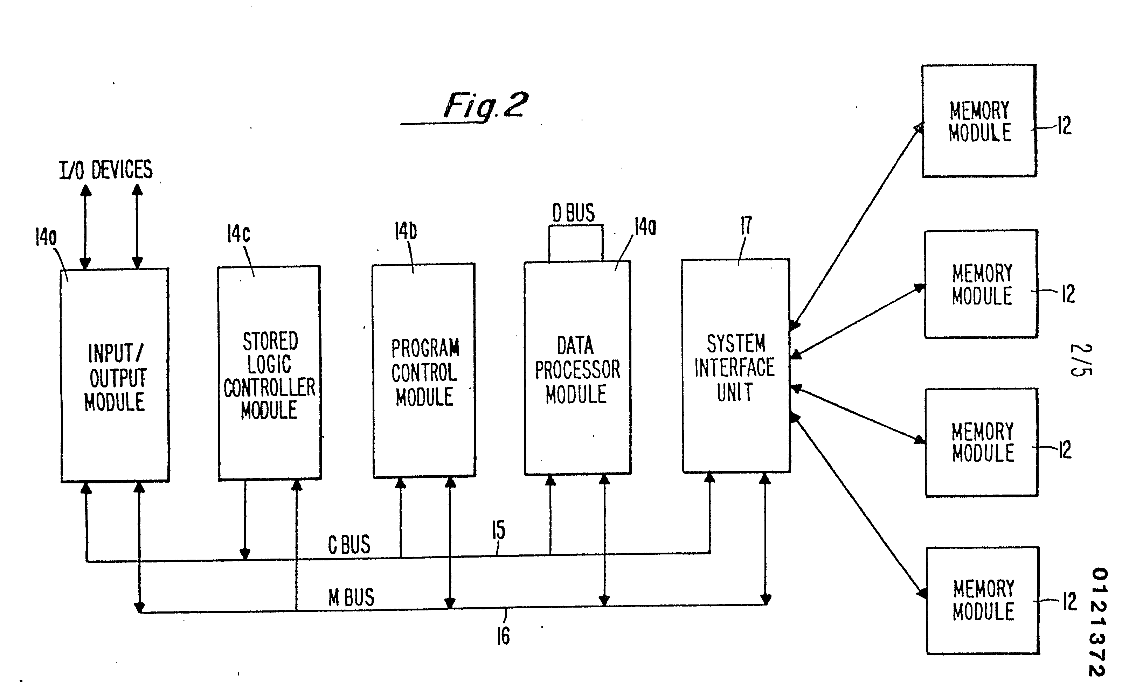

A typical auxiliary processor and the system interface for the present invention are illustrated in Figure 2 where the auxiliary processor is a modular two primary bus system that includes data processing module 14a, program control module 14b, stored logic controller module 14c and an Input/Output module 14d which communicate with one another via CBUS 15 and MBUS 16. CBUS 15 is used to broadcast control information from stored logic controller 14c to all the other modules while MBUS 16 is used to transfer data and address information to the various modules of the auxiliary processor. DBUS is illustrated as being employed locally within data processing module 14a .

In addition, auxiliary processor of Figure 2 would include a memory control module to access the local memory of one million words. However, since the auxiliary processor is to interface with a much larger system, such a controller is replaced in Figure 2 by system interface unit 17 which communicates with the rest of the auxiliary processor by way of CBUS 15 and MBUS 16.

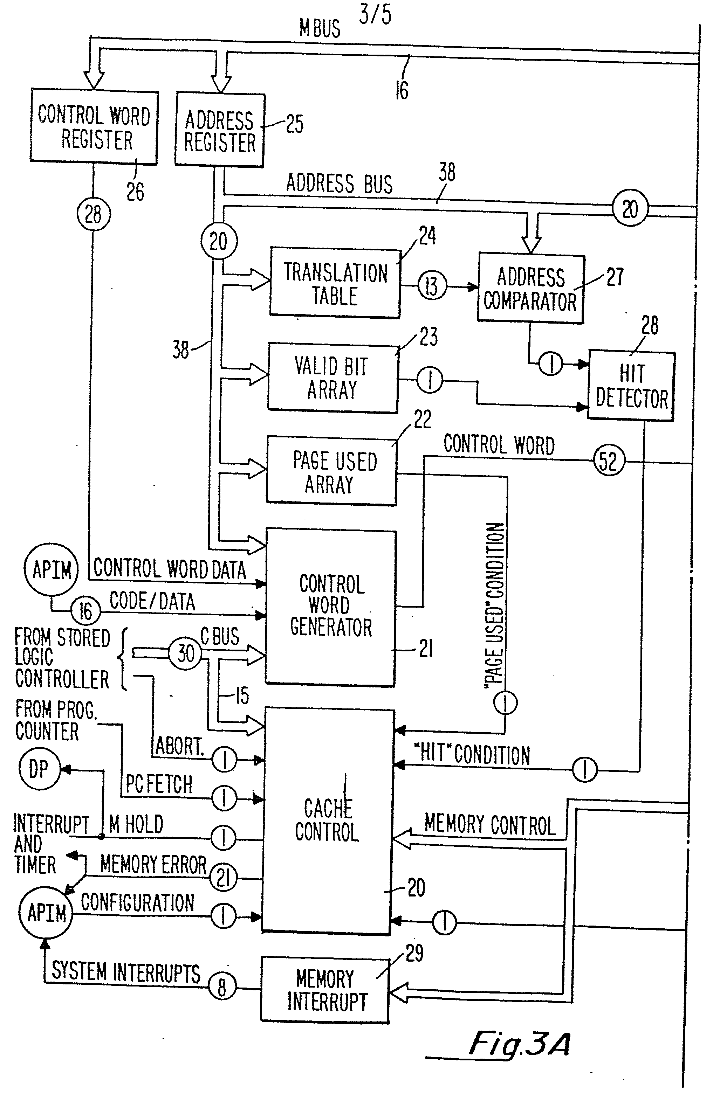

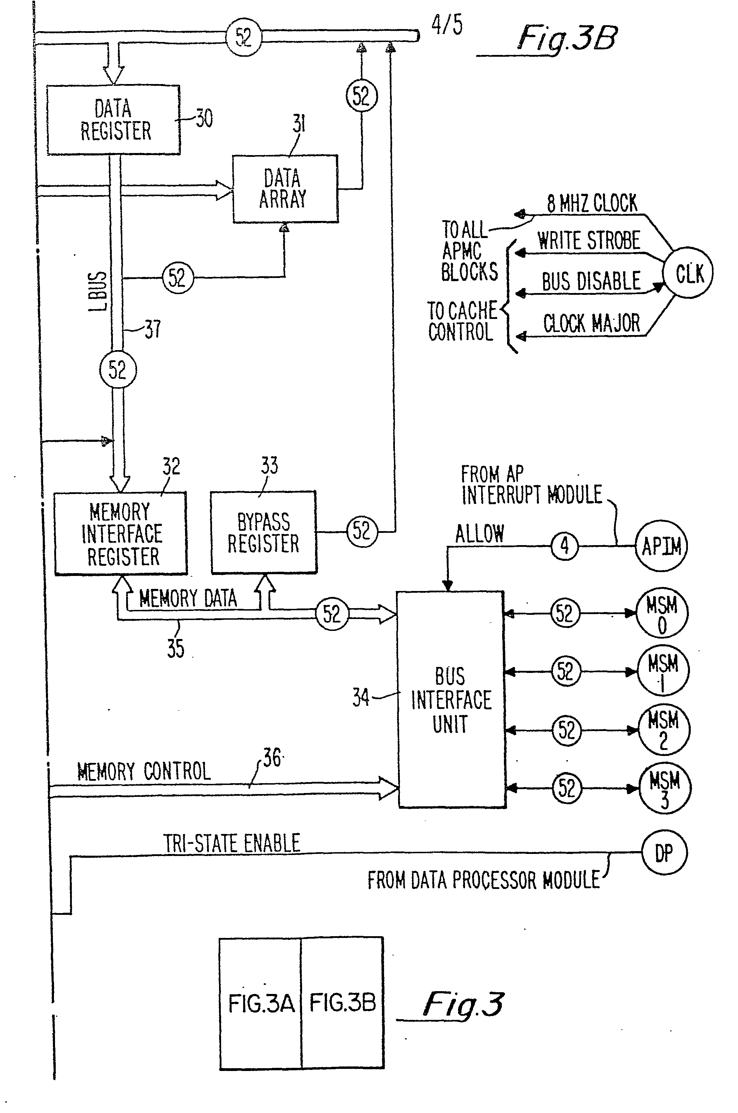

A diagram of the functional units of the system interface of the present invention is provided in Figure 3 which illustrates the various functional units of the cache mechanism, main memory interface mechanism, and the two level microcontroller
20 for providing control of a cache mechanism and
main storage interface mechanism in an overlap manner
in accordance with the present invention. Data
and addresses are supplied to the cache memory
mechanism by way of MBUS 16 of Figure 2. Data for
storage in main memory system is passed through the
cache mechanism to main memory interface mechanism
for transmission to the main memory system. Data
and code received from the main memory system is
received by the main memory interface mechanism and
transmitted to the cache memory mechanism for
subsequent transmission to the auxiliary processor
on MBUS 16. Individual data words can also be
transmitted directly from the main memory interface
mechanism to the MBUS 16. Commands are received by
microcontroller 20 from CBUS 15 of Figure 2 to
drive the respective cache and main memory interface
control stores to activate their corresponding units.
The main memory interface mechanism also receives
commands from CBUS 15 for the generation of main
memory control words for the accessing of data in main
memory.

DETAILED DESCRIPTION OF THE INVENTION

Cache Memory Mechanism

The principle function of the cache memory
mechanism is to reduce memory access times from
approximately 1600 nanoseconds for the large main
memory system to the 600 nanosecond access time of
the auxiliary processor. In addition, the cache
mechanism includes an efficient cache purge mechanism requiring only a few clock times. All stores to the
cache mechanism from the auxiliary processor are to
be immediately passed onto the main memory system.
In addition, the cache memory mechanism also performs
program code prefetching as will be more thoroughly
described below. Referring again to Figure 3, the
principle element of the cache mechanism is data
array 31 which is a random access memory of 256
word locations or registers of 52 bits each. The array
is divided such that program code occupies 128 words
and data occupies 128 words. The segregation
of program code from data allows prevention of random
data accesses from overwriting code loops which may
be captured in the cache as well as facilitates the
selective purging of data without purging useful program
code and also allows for the program code prefetching
mechanism to be more further described below.

Each of the 128 word groups is divided
into 16 eight word pages so as to allow all fetches to
the main memory system to be eight word operations.

Addressing data array 31 is accomplished
by passing the seven least significant bits (4 page
bits and three word bits) of the requested 20 bit
address to the data array. The most significant
address bit is generated by the cache control unit
which determines from the requested operation whether to
access the program code or the data portion of the data
array.

Translation table 24 of Figure 3 is
organized as 32 word locations of 13 bits each. Each
word location corresponds to an 8 word page in data
array 31. There are 16 words corresponding to program
code entries and 16 words corresponding to data entries in the data array.  The 13 bit word in the translation
table is a 13 most significant address bits of the
data held in the corresponding page of data array 31.
The translation table is addressed by 4 page bits of the
requested 20 bit address.  The most significant
address bit of the translation table is generated by
a control unit 20.  When the output of translation
table 24 compares with the 13 high order bits of the
requested address, address comparator 27 signals hit
detection unit 28.

Valid bit array 23 is used to indicate the
validity or proper entry of an address in
translation table 24.  It is arranged as two 4 by 4
register files containing one bit for every entry in
translation table 24.  This arrangement allows the cache
to be purged in 4 clock times instead of 32 since all
that is necessary to purge the cache is to reset
the valid bits in the valid bit array.  The valid bit
array is addressed by the page bits of the requested
20 bit address.  As in the case of data array 31 and
translation table 24, the most significant address
bit for the valid bit array is generated by control unit 20.

Page used array 22 has one bit corresponding
to every entry in the program code portion of the
translation table 24.  It also is implemented in a
physically separate 4 by 4 register file.  The page used
array 22 is employed by the program code look-ahead
or prefetch algorithm.  It is managed by control unit 20.

The cache mechanism is activated by receipt
by address register 25 of a 20 bit address from MBUS 16
which address is simultaneously supplied to translation
table 24, valid bit array 23, address comparator 27, page used array 22 and data array 31. If control unit
20 has also received a fetch command from CBUS 15, the
output of translation table 24 is compared by hit detection
unit 28 with the 13 most significant bits of the requested
20 bit address. If they are equal and valid bit
corresponding to the translation table entry is true,
the data now present at the output of data array 31 is
the requested data. Otherwise, the requested data is
not present in the cache mechanism and must be requested
from main memory. If the fetch request is for program
cod e, the prefetching algorithm described below is
also invoked.

When control unit 20 receives a store
command from CBUS 15, the translation table 24 is
compared with the 13 most significant bits of the
requested 20 bit address and, if they are equal and
the valid bit corresponding in the translation table
entry is true, hit detection unit 27 signals control
unit 20 causing it to generate a write signal to
the data array. The data is also sent to the main
memory interface mechanism for transmission to main
memory.

The prefetch algorithm is essentially as follows:

When code is requested by the auxiliary processor,
the cache mechanism determines whether the requested page
is present in data array 31.

If the requested page is present in data array 31,
the requested word is transmitted to the auxiliary
processor. If the Page Used Bit associated with the
requested page is set, the operation terminates. If the
Page Used Bit associated with the requested page is not set, a prefetch operation is initiated. The
control unit calculates the address of the "NEXT" eight
word page. This address is presented to the cache
mechanism which determines whether the "NEXT" page is
present in data array 31. If it is present, the Page
Used Bit associated with the requested page is set and
the operation terminates. If it is not present, the
cache control unit directs the memory interface control
unit to initiate a main memory request for the "NEXT"
page. At this time, the Page Used Bit associated with
the requested page is set·and the cache control unit goes
to the idle state thereby making it available to service
auxiliary processor requests. Meanwhile, the memory
interface control unit maintains communication with the
main memory system. When the main memory system responds
with the "NEXT" page data, the memory interface control
unit directs this data to the appropriate location in
data array 31. The memory interface control unit resets
the Page Used Bit associated with the "NEXT" page and
enters the idle state thereby completing the prefetch
operation.

     If the requested page is not present in data
array 31, a main memory request is initiated. When the
main memory system returns the requested page, the data
is directed to the appropriate location in data array 31.
Simultaneously, the requested word is directed to the
auxiliary processor. At this time the control unit
calculates the address of the "NEXT" eight word page.
This address is presented to the cache mechanism which
determines whether the "NEXT" page is present in data
array 31. If it is present, the Page Used Bit associated
with the requested page is set and the operation terminates
If it is not present, the cache control unit directs the memory interface control unit to initiate a main memory
request for the "NEXT" page.  At this time, the Page
Used Bit associated with the requested page is set and
the cache control unit goes to the idle state thereby
mak ing it available to service auxiliary processor
requests.  Meanwhile, the memory interface control unit
maintains communication with the main memory system.
When the main memory system responds with the "NEXT"
page data, the memory interface control unit directs
this data to the appropriate location in data array 31.
The memory interface control unit resets the Page Used
Bit associated with the "NEXT" page and enters the idle
state thereby completing the prefetch operation.

Main Memory Interface Mechanism

          The remaining functional elements in Figure 3,
except for control unit 20, form the main memory
interface mechanism of the present invention.
These functional units include memory bus interface
unit 34, memory interface register 32, bypass register
33 and control word generator 21.  With these units,
the main memory interface mechanism interfaces the
auxiliary processor to the main multiprocessing system.
More specifically, it interfaces the four main memory
units 12 of Figure 1 with the above-described cache
memory mechanism and thus the auxiliary processor.

          Bus interface unit 34 is capable of selectively
listening to any one but only one of the four memory
modules 12 in Figure 1 and it is capable of broadcasting
to all such memory modules simultaneously.  The buses
between bus interface unit 34 and the respective memory
modules is basically a bidirectional 52 bit wide bus.
In addition, the bus interface unit includes a handshake
unit (not shown) which is responsible for sending and receiving control signals to and from the four
memory modules. The primary control lines to the
respective memory modules, in addition to the 52 bit
wide bus include a requester to memory request line,
a requestor to memory data valid line, a memory to
requestor acknowledge line, and the memory to requester
fail line.

Control word generator 21 takes commands
from the auxiliary processor by way CBUS 15 and
converts them into main memory module control words.
This unit is responsible for the extended address
capability required to address the main memory
system. Control words are 52 bits in width and are of
two different formats. One format is the memory operation
request which is used for normal memory operations
such as fetch and store and contains four different
fields plus the fifth field which is not employed. The
four fields are a twenty bit address field supplied by
the auxiliary processor from MBUS 16 by way of address
register 25 and address bus 38; an extended address
field which is obtained from one of two base registers
(not shown) in control word generator 21; a length
field which specifies whether one data or code word
is to be fetched from memory or eight such data or
code words; an opcode field which contains a
main memory defined opcode consistent with the operation
being performed with one of the main memory modules.

The two base registers, which provide the
extended address field during a fetch from main memory,
are "data environment register" and a "code environment
data register" which are respectively being used
according to whether or not data or code is being
received from one of the main memory modules. Finally, parity is generated for the overall control word
and inserted into a parity field.

The other control word format is a memory
management request control word which is used to
request special memory management operations.  It is
52 bits in width and contains an opcode field similar
to the one described in the memory operation request
control word;  a length field which is always one and a
variant field which is generated by the auxiliary
processor to create variations of basic requests,
thus reducing the number of opcodes required.

Cache bypass register 33 is employed to
pro vide a direct path from the main memory modules
to MBUS 16.  When data returning from one of the main
memory modules is not going to update the cache
mechanism, bypass register 33 is used to channel the
data directly to the auxiliary processor.  When the
data returning from the main memory module is
destined to update the cache mechanism and is required
by the auxiliary processor, that data is copied by
the bypass register 33 while simultaneously being
supplied to memory interface register 32 to data
array 31 by way of LBUS 37.

A word counter register (not shown) is
provided as a three bit register which is the memory
interface mechanism's ability to generate "word addresses"
for purposes of updating the cache memory.  When a
requested data or program code data item is not present
in the cache, the address of that item is sent,
by way of interface mechanism, to one of the main
memory modules.  However, instead of requesting
just that item, the entire page (8 words) where that item resides is requested. The page, however, is
requested such that the requested word returns first
from main memory module. For example, if the
desired word is the fifth word in a given eight word
page, the data returns from the selected memory
module in the following sequence: word 5, word 6,
word 7, word 0, word 2, word 3 and word 4. This
scheme allows the desired word to return, on the
average, four clock times faster than would occur
if the pages were returned always starting with word 0.
The word counter captures the word bits (least
significant bits) from the requested address. When
the eight word page returns from memory module the
word counter is incremented, modulo 8, to generate
the "word address bits", so the cache mechanism can be
updated.

Two level Control Store

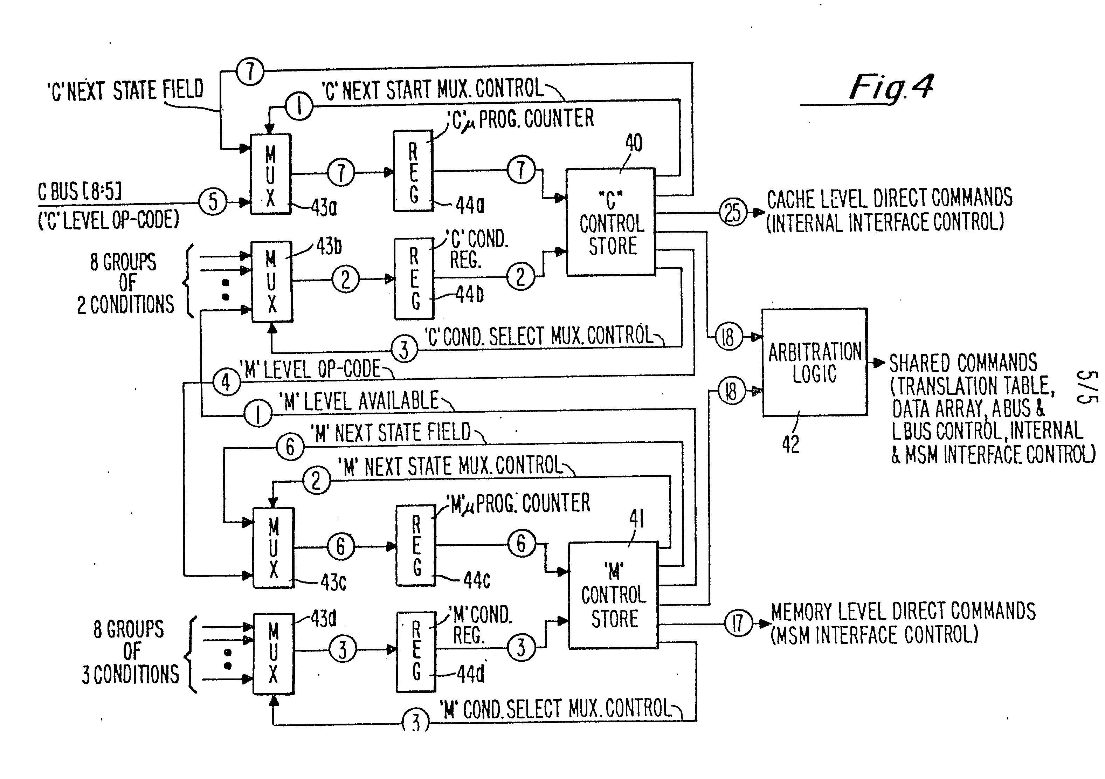

Control unit 20 of Figure 3 is illustrated
in Figure 4 and is comprised of two control stores
arranged in a hierarchy with the first control store
supplying control signals for the cache memory
mechanism described above and also addresses to
the second control store which supplies control signals
to the main memory interface mechanism described above.

This control mechanism was designed
with two overriding purposes. One consideration is
the provision of a flexible mechanism which would
allow changes in existing operations and the addition
of new operations by providing control stores that
can be configured or replaced. The other consideration
is to allow program code prefetching that does not
interfere with normal cache mechanism operation. The
second consideration requires two microprogram
controllers for keeping track of two asynchronous,
simultaneous operations.

In Figure 4, the cache memory controller is comprised of control store 40 which is addressed by the contents of both register counters 44a and 44b. The contents of register counter 44a include an address received by way of multiplexor 43a from CBUS 15 of Figures 2 and 3. This initial address is the first state of the routine which forms the requested cache mechanism operation. This first state knows the address of the next state, places the next state address on the next state field lines back to multiplexor 43a. It also changes the control of the next state multiplexor 43a selecting the next state field as an input to microprogram counter 44a. As the sequence continues, each routine state points to the next until the routine end is encountered. At this point, the control to the next state multiplexor 43a is changed so that CBUS 15 provides the next address to program counter 44a. Hence, the controller of Figure 4 is available for the next auxiliary processor request and, if no request is present, CBUS will pass the appropriate signals to the contoller.

In addition to straight line sequencing, control store 40 can "test" two conditions by way of the low order address bits received by multiplexor 43b which passes the desired condition bits to condition register 44b. The conditions are examined during the next routine state. The inclusion of the condition testing allows for a more flexible microcontrol store.

-18-

Conditions tested by the cache memory control store include:

availability of the main memory interface control store to accept an operation;

availability of a clock or clock cycle for data transfer to or from the processor;

translation table parity error;

presence of a requested address in the cache mechanism;

currently addressed code page has been previously accessed (see prefetch algorithm above);

cache address limit error; and

last cache memory cycle awarded to main memory interface control store.

Control store 41 provides control signals for the main memory interface mechanism and is identical to cache control store 40 except that it receives the initial address (opcode) from cache control store 40 instead of the CBUS. In addition, it can test three conditions instead of two. Both control stores 40 and 41 respectively provide control signals to the cache memory mechanism and the main memory interface mechanism. They also provide shared commands by way of arbitration logic 42 for data array 31, translation table 24, address bus 38, LBUS 37 and bus interface unit 34. It is to be remembered that controls 40 and 41 operate asynchronously and arbitration logic 42 is provided to accept control signals from one or the other of the control stores.

Conditions tested by the main memory interface control store include:

acknowledgment of main memory available for last memory request;

an acknowledge signal has been received for
more than one main memory module (an error condition);

an error detected in a control word presented
to main memory;

an interface parity error;

memory to requester data valid;

main memory system has detected an internal
failure;

general purpose counter overflow;

failure of main memory to respond to a request
within a reasonable amount of time; and

memory to requester operation complete.

In the controller of Figure 4, the control flow
is from the auxiliary processor CBUS to the cache
mechanism control store 40 to the main
memory interface control store 41, with each control
store notifying the other of its current state.  That
is to say, the main memory interface control store
sends a signal to the cache control store when it is
idle and the cache control store notifies the auxiliary
processor when it is not idle.  This handshaking
action prevents the driving control store from issuing
another operation before the driven control store
has completed a previous operation.

With the controller of Figure 4, the cache
mechanism control store can request a program code
prefetch operation from main memory interface mechanism
and, when the main interface control store is busy
communicating with main memory, the cache mechanism
control store is free to service auxiliary processor
requests for code or data in the cache memory.

-20-

## EPILOGUE

A two level controller has been described for a system interface between an auxiliary processor and main memory modules of a multiprocessing system which respective processor and system have different clock rates, memory access times and memory addressing capabilities. Such a controller allows for communication between the auxiliary processor and a cache mechanism in the system interface to be carried on independently of main memory accesses required to update the cache mechanism in an overlapped manner.

While the one embodiment of the present invention has been disclosed, it will be apparent to those skilled in the art that variations and modifications may be made without departing from the spirit and scope of the invention as claimed.

What is claimed is:

1. A control device for controlling a plurality of digital mechanisms in an overlapped manner in response to a command code, said device comprising:

at least a first control store and a second control store each having outputs coupled to provide control signals to respective ones of said digital devices;

said first control store having an input to receive said command code as an address, said first control store supplying in response to said command code a command code to address said second control store.

2. A control device according to Claim 1 wherein:

said second control store is coupled to said first control store to signal said first control store of the availability of said second control store to receive a command code.

3. A control device according to Claim 2 wherein:

each control store is provided with a multiplexor circuit to receive its respective address, each control store having its output connected to its multiplexor circuit to supply its next address in lieu of said respective address according to the current state of the respective control store.

4. A control device according to Claim 3 wherein:

each control store is provided with program counter means to increment a previous code address to address the resepective control store unless a new code address is received from said respective multiplexor.

5. A control device according to Claim 1 wherein:

 :each control store is provided with a condition register to receive condition signals for transmission to the respective control store as a part of its code address.

6. A control device according to Claim 5 further including:

arbitration logic coupled to the outputs of both control stores to receive control signals from one or the other of said control stores for controlling a third digital mechanism.

7. A control device for controlling a plurality of digital mechanisms in an overlapped manner in response to a command code, said device comprising:

at least a first control store and a second control store each having outputs coupled to provide control signals to respective ones of said digital devices;

each control store being provided with a condition register to receive condition signals for transmission to the respective control store as a part of its address;

said first control store having an input to receive said command code as part of its address, said first control store supplying in response to said command code a command code to address said second control store.

8. A control device according to Claim 7 wherein:
:said second control store is coupled to said condition register of said first control store to signal said first control store of the availability of said second control store to receive a command code.

9. A control device according to Claim 8 wherein:
each control is provided with a multiplexor circuit to receive its respective address, each control store having its output connected to said multiplexor circuit to supply its next address in lieu of said respective address according to the current state of the respective control store.

10. A control device according to Claim 9 wherein:
each control store is provided with program counter means to increment a previous code address to address the respective control store unless a new code address has been received from the respective multiplexor.

0121372

Fig.1

*Fig.2*

2/5

0121372

Fig.3A

_Fig.3B_

4/5

⑤2

DATA REGISTER —30

DATA ARRAY 31

⑤2

L BUS

37

⑤2

52

MEMORY INTERFACE REGISTER 32

BYPASS REGISTER 33

⑤2

MEMORY DATA

35

MEMORY CONTROL 36

TRI-STATE ENABLE

8 MHZ CLOCK

TO ALL APMC BLOCKS

WRITE STROBE

BUS DISABLE

CLK

TO CACHE CONTROL

CLOCK MAJOR

FROM AP INTERRUPT MODULE

ALLOW

④ APIM

34 BUS INTERFACE UNIT

⑤2 MSM 0

⑤2 MSM 1

⑤2 MSM 2

⑤2 MSM 3

DP

FROM DATA PROCESSOR MODULE

| FIG.3A | FIG.3B |
|--------|--------|

_Fig.3_

*Fig.4*

0121372